# EUROPÄISCHE PATENTSCHRIFT

(11) **EP 2 981 709 B1**
(45) Veröffentlichungstag und Bekanntmachung des Hinweises auf die Patenterteilung: **12.12.2018**
(21) Anmeldenummer: 14709560.8
(22) Anmeldetag: 11.03.2014
(51) Int. Cl.: F03D 7/02, F03D 80/50, F03D 80/00

(54) **VERFAHREN ZUM ARRETIEREN EINER WINDTURBINE UND WINDTURBINE ZUR DURCHFÜHRUNG DES VERFAHRENS**
METHOD FOR STOPPING A WIND TURBINE AND WIND TURBINE FOR PERFORMING THE METHOD
PROCÉDÉ D'ARRÊT D'UNE ÉOLIENNE ET ÉOLIENNE PERMETTANT LA MISE EN OEUVRE DE CE PROCÉDÉ

(30) Priorität: 18.03.2013 DE 102013004580
(43) Veröffentlichungstag der Anmeldung: 10.02.2016
(73) Patentinhaber: Wind-Direct GmbH, 68161 Mannheim (DE)
(72) Erfinder: MUIK, Tobias, 64625 Bensheim (DE)
(74) Vertreter: Kesselhut, Wolf
(86) Internationale Anmeldenummer: PCT/EP2014/000643
(87) Internationale Veröffentlichungsnummer: WO 2014/146764

(56) Entgegenhaltungen:
- EP-A1- 2 333 325
- WO-A1-2005/090780
- DE-A1-102007 058 746
- US-A1- 2010 123 314
- US-A1- 2011 260 461

## Beschreibung

Die Erfindung betrifft ein Verfahren zum Arretieren einer Windturbine sowie eine Windturbine zur Durchführung des Verfahrens gemäß dem Oberbegriff von Anspruch 1 und 8.

Moderne Windturbinen siehe z. B. US 2011/260461 A1, im Multi-Megawettbereich sind in der Regel mit Rotorblättern ausgestattet, die durch eine Verstelleinrichtung um ihre zentrale Längsachse verdreht werden können, um diese bei Bedarf aus dem Wind zu drehen, was in Fachkreisen auch als "Rotor-Pitch" bezeichnet wird. Werden die Rotorblätter aus dem Wind "gepitcht", reduziert sich die Windangriffsfläche des Rotors und das aerodynamische Drehmoment auf die Antriebswelle wird minimiert. Da diese beschriebene aerodynamische Bremse üblicherweise die einzige Bremse ist, muss jedes der Rotorblätter mit einem völlig redundanten Pitchsystem ausgestattet sein, so dass die verbleibenden Blätter auch bei Ausfall eines Blattes, bzw. der zugehörigen Verstelleinrichtung zuverlässig aus dem Wind gedreht werden können und dadurch eine sichere Reduktion der Drehzahl gewährleistet werden kann. Nach dem Bremsvorgang verbleibt der Rotor normalerweise im sogenannten "Trudelbetrieb", bei dem sich die Rotorblätter ähnlich einer Fahne frei im Wind bewegen können. Hierdurch wird die Turbine zwar nicht völlig stillgesetzt, jedoch verringern sich die aerodynamischen Lasten auf Rotor und Turm erheblich.
Ein Stillsetzen des Rotors ist lediglich bei Wartungs- und Reparaturarbeiten am drehenden Teil der Turbine erforderlich, beispielsweise am nabenseitigen Teil der Verstelleinrichtung, bzw. am Rotor etc.. Um die Windturbine für derartige Arbeiten stillzusetzen, wird diese bekanntermaßen durch eine mechanische Bremseinrichtung im Antriebsstrang abgebremst und in der gewünschten Winkelposition, in der insbesondere ein Zugang zu dem rotierenden nabenseitigen Teil des Rotors besteht, eine formschlüssige Arretierung des Rotors vorgenommen. Diese ist in einschlägigen Normen vorgeschrieben und besteht darin, dass im festgebremstem Zustand von Hand ein Arretierbolzen vom Stator aus in eine entsprenchende Aufnahmebohrung im Rotor eingeschoben wird. Um den Bolzen zur Arretierung von jeder beliebigen Rotorposition aus einschieben zu können, ist es in der Praxis bekannt, den Rotor beispielsweise durch den dann motorisch betriebenen Generator an die gewünschte Position zu fahren. Nachteilig ist es in diesem Zusammenhang, dass hierfür zusätzlich ein 4-Quadranten-Umrichter und ein Lagegeber für die Rotorposition benötigt werden, was die Windturbine zusätzlich verteuert. Bei nicht betriebsbereitem Umrichter (z.B. wegen fehlendem Versorgungsnetz) ergibt sich bei hinreichendem Wind zudem die Möglichkeit, die gewünschte Rotorposition durch gezieltes manuelles Verstellen der Rotorblätter und gleichzeitiges Betätigen der mechanischen Bremse anzufahren und durch die Bremse fest zu setzen, um anschließend den Arretierbolzen von Hand in die rotorseitige Aufnahmeöffnung einzuschieben. Dies erfordert in der Praxis jedoch vergleichsweise viel Erfahrung und geschultes Personal, da die mechanische Bremse und Rotorblattverstellung gleichzeitig in Abhängigkeit von der jeweiligen Windgeschwindigkeit und Windrichtung verändert werden müssen.

Zurzeit befinden sich elektromechanische und hydraulische Rotorbremsen in der Anwendung. Die auf dem Markt weitverbreiteten hydraulischen Bremsvorrichtungen besitzen den Nachteil, dass Öl-Leckagen und verschlissene Ventile im Hydrauliksystem häufig zu einem Verlust der Bremskraft bis hin zu einem Totalausfall des Bremssystems führen. Häufige Wartungsarbeiten am Hydrauliksystem haben zudem hohe Wartungskosten und lange Stillstandszeiten der Windturbine zur Folge. Insbesondere bei Offshoreanlagen sind die Wartungskosten und Stillstandszeiten aufgrund eines fehlerhaften Hydrauliksystems sehr viel höher als bei Anlagen auf dem Festland.

Eine gegenüber hydraulischen Rotorbremsen höhere Zuverlässigkeit und einen verbesserten Funktionsfähigkeit bieten die bekannten elektromechanischen Rotorbremsen. Bei diesen werden die Bremsbeläge durch einen Elektromotor bewegt. Die wesentlichen Vorteile der elektromechanischen Rotorbremsen gegenüber den hydraulischen Systemen liegen in der durch den Wegfall des Hydraulikaggregats und der reduzierten Anzahl von Bauteilen bedingten kompakteren Bauweise der Bremssysteme. Obgleich die elektromechanischen Rotorbremssysteme eine erhöhte Anlagensicherheit und einen geringeren Wartungsaufwand besitzen, müssen auch hier die verschlissenen Bremsbeläge gewechselt werden.

Bei Windturbinen mit Getriebe zwischen Turbine und Generator wird die mechanische Rotorbremse üblicherweise aufgrund des geringeren Drehmomentes und dem damit einhergehenden reduzieren Bauvolumen auf der schneller laufenden Generatorseite installiert. Bei einer direkt angetriebenen Windturbine muss jedoch das demgegenüber hohe turbinenseitige Drehmoment von der Bremse aufgenommen werden. Die Bremseinrichtung weist deshalb ein großes Bauvolumen auf und führt dadurch zu einem erheblichen Mehraufwand in der Gondel.

Dennoch kann bei den bekannten Windturbinen trotz der zuvor genannten Nachteile auf die mechanischen Rotorbremsen nicht verzichtet werden kann, da andernfalls bei einem nicht betriebsbereiten Umrichter die Möglichkeit entfällt, den Rotor überhaupt abzubremsen und zu arretieren.

Demgemäß ist es eine Aufgabe der vorliegenden Erfindung, ein Verfahren zum Arretieren des Rotors einer Windturbine sowie eine Windturbine zur Durchführung des Verfahrens zu schaffen, bei denen der Einsatz einer zusätzlichen mechanischen Bremseinrichtung entfallen kann.

Diese Aufgabe wird erfindungsgemäß durch die Merkmale von Anspruch 1 und 8 gelöst.

Weitere Merkmale der Erfindung sind in den Unteransprüchen beschrieben.

Gemäß der Erfindung zeichnet sich das Verfahren zum Arretieren des Rotors einer Windturbine, der einen Generator antreibt und wenigstens ein Rotorblatt aufweist, das durch eine Verstelleinrichtung aus einer Betriebsstellung in eine Fahnenstellung um seine Längsachse verstellbar ist, in der im Wesentlichen kein Drehmoment auf den Rotor ausgeübt wird, wobei der Rotor durch Einschieben eines Arretierbolzens in eine rotorseitige Aufnahmeöffnung in einer Arretierposition gegen eine Rotation sperrbar ist, dadurch aus, dass der Rotor durch Kurzschließen wenigstens einer Statorwicklung des Generators in eine Kriech-Rotationsbewegung mit einer solch niedrigen Rotationsgeschwindigkeit versetzt wird, dass der Arretierbolzen bei rotierendem Rotor in die rotorseitige Aufnahmeöffnung eingeschoben werden kann.

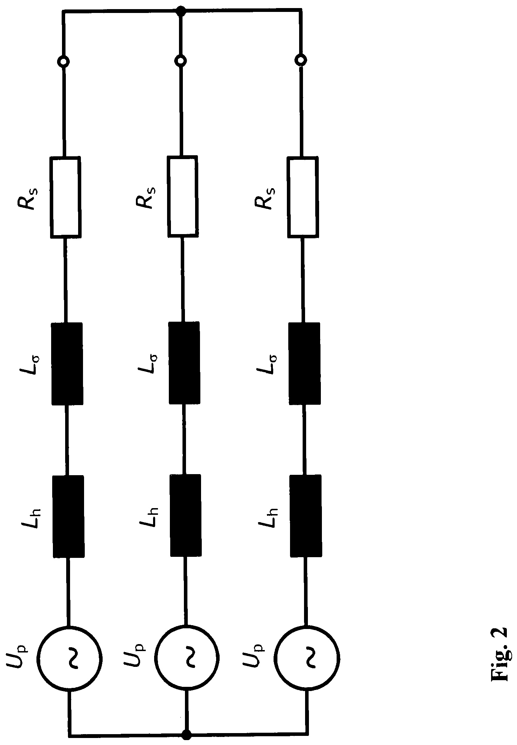

Das erfindungsgemäße Verfahren setzt hierbei einen Generator, insbesondere einen Synchrongenerator mit Permanentmagneterregung voraus, wobei sich die Erfindung den physikalischen Effekt zunutze macht, dass das unabhängig vom Versorgungsnetz permanent vorhandene Rotorfeld des Generators bei jeder Bewegung des Rotors in der zugehörigen Statorwicklung eine elektrische Spannung induziert. Ist der Generator ein elektrisch erregter Synchrongenerator, wird im Falle des fehlenden Versorgungsnetzes die Erregung mit Hilfe von Batterien vorgenommen. Durch eine geeignete Kurzschluss-Schaltung der Statorwicklung und Betätigen, bzw. Öffnen eines Kurzschlusschalters, mit dem bevorzugt alle drei Phasen des Generators gemäß dem Maschinen-Ersatzschaltbild in Fig. 2 gegeneinander kurzgeschlossen werden, wird dann die daraus resultierende elektromagnetisch bremsende Kraft des Generators ausgenutzt, um den vom Wind aufgrund der nahezu eingenommenen Fahnenstellung der Rotorblätter mit einem vergleichsweise geringen Drehmoment angetriebenen Rotor in die Arretierposition zu verfahren, in der der Arretierbolzen in die zugehörige Öffnung eingeführt werden kann.

Obgleich sich durch das elektromagnetisch erzeugte Gegenmoment die Rotordrehzahl nicht auf null reduzieren lässt, sondern der Rotor stets mit einer wenn auch sehr geringen Drehzahl rotieren muss, um die Bremswirkung zu erzeugen, wurde von der Anmelderin erkannt, dass die sich einstellenden Kriechbewegung hinreichend langsam ist, um den Rotor der Turbine beim Erreichen der Arretierposition durch Einschieben des Bolzens zuverlässig mechanisch mit dem Stator koppeln zu können und dadurch den Rotor der Windturbine bei Arbeiten am Rotor zuverlässig zu arretieren. Eine aufwändige und wartungsintensive mechanische Bremsvorrichtung wird daher in vorteilhafter Weise nicht mehr benötigt.

Bei der bevorzugten Ausführungsform der Erfindung umfasst das Verfahren hierzu die nachfolgend beschriebenen Verfahrensschritte.

Zuerst wird die Windturbine dadurch in den Trudelbetrieb versetzt, dass das wenigstens eine Rotorblatt, bevorzugt jedoch alle Rotorblätter, aus der Betriebsstellung in die Fahnenstellung verstellt werden. Wenn sich der Trudelbetrieb sicher eingestellt hat, werden die Windgeschwindigkeit und/oder die Windrichtung erfasst, bzw. überprüft und dann die Gondel der Windturbine derart nachgeführt, dass die Rotorachse im Wesentlichen in Windrichtung weist. Anschließend wird die Rotordrehzahl überprüft und der Trudelbetrieb dadurch verifiziert, dass die Rotordrehzahl im Wesentlichen null ist. Danach wird die wenigstens eine Statorwicklung des Generators, der insbesondere ein direkt angetriebener Permanentmagnet erregter Synchrongenerator ist, kurzgeschlossen, um die Kriech-Rotationsbewegung des Rotors einzuleiten. Anschließend wird das wenigstens eine Rotorblatt in Abhängigkeit von der Windstärke gegenüber der Fahnenstellung verstellt, um die gewünschte Arretierposition anzufahren. Sobald diese erreicht ist, wird der Arretierbolzen in die Aufnahmeöffnungn eingeschoben. Anschließend wird das wenigstens eine Rotorblatt bevorzugt wieder in die Fahnenstellung zurück verstellt.

Bei der bevorzugten Ausführungsform des erfindungsgemäßen Verfahrens wird das wenigstens eine Rotorblatt zum Anfahren der Arretierposition aus der Fahnenstellung (90°) in einem Winkelbereich zwischen etwa 95° und 85° Grad bezogen auf die Drehebene des Rotors verstellt. Hierbei wird der jeweilige Winkel in Abhängigkeit von der momentanen Windgeschwindigkeit und/oder Windrichtung insbesondere manuell eingestellt und verändert. Bei der bevorzugten Ausführungsform des Verfahrens wird der Winkel während des Anfahrens der Arretierposition fortlaufend in dem genannten Bereich verstellt, um die gewünschte Rotationsgeschwindigkeit der Kriech-Rotationsbewegung vorzugsweise im Wesentlichen konstant und unterhalb einer maximalen Obergrenze zu halten.

Die Rotationsgeschwindigkeit des Rotors während der Kriech-Rotationsbewegung wird dabei durch "Pitchen" des, bzw. der Rotorblätter so eingestellt, dass diese weniger als 1 Grad/s beträgt und insbesondere zwischen 0,00 und 0,15 Grad/s liegt.

Nach einem weiteren der Erfindung zugrundeliegenden Gedanken kann es zweckmäßig sein, die Rotationsgeschwindigkeit der Kriech-Rotationsbewegung kurz vor dem Erreichen der Arretierposition durch Verstellen des Rotorblattwinkels in Richtung Fahnenstellung nochmals weiter zu reduzieren, um die auf den Bolzen durch den rotierenden Rotor ausgeübten Kräfte nach dem Einschieben desselben in die rotorseitige Aufnahmeöffnung weiter zu verringern.

Obgleich die Windnachführung der Gondel in Abhängigkeit von der momentan herrschenden Windgeschwindigkeit und/oder Windrichtung bevorzugt manuell erfolgt, kann es insbesondere bei großen Windturbinen von Vorteil sein, das Überprüfen der Windgeschwindigkeit und/oder der Windrichtung und/oder das Nachführen der Gondel und/oder das Überprüfen der Rotordrehzahl und Verifizieren des Trudelbetriebs sowie bevorzugt auch das Kurzschließen der wenigstens einen Statorwicklung bzw. das Anfahren der gewünschten Arretierposition automatisiert durchzuführen. Ebenso kann das Einschieben des Arretierbolzens in die Aufnahmeöffnung beim Erreichen der Arretierposition nicht nur von Hand, sondern auch durch einen motorischen Antrieb, oder durch eine auf den Bolzen wirkende federelastische Kraft, z.B. eine vorgespannte Druckfeder erfolgen, die den Bolzen in Richtung der Aufnahmeöffnung drängt.

Nach einem weiteren der Erfindung zugrunde liegenden Gedanken umfasst eine Windturbine zur Durchführung des zuvor beschriebenen Verfahrens einen Rotor, der eine Generator antreibt und wenigstens ein Rotorblatt aufweist, das durch eine Verstelleinrichtung aus einer Betriebsstellung in eine Fahnenstellung verstellbar ist, wobei der Rotor durch Einschieben eines Arretierbolzens in eine rotorseitige Aufnahmeöffnung in einer Arretierposition gegen eine Rotation sperrbar ist. Die Windturbine zeichnet sich dadurch aus, dass diese einen Kurzschlussschalter, insbesondere in Form eines manuell betätigbaren Schalters in der Gondel, aufweist, durch den die wenigstens eine Statorwicklung, vorzugsweise jedoch alle Statorwicklungen des Generators gegeneinander und untereinander kurzgeschlossen werden können, um den Rotor in eine Kriech-Rotationsbewegung mit einer solch niedrigen Rotationsgeschwindigkeit zu versetzen, dass der Arretierbolzen, bei rotierendem Rotor in die rotorseitige Aufnahmeöffnung einschiebbar ist.

Bei dem Generator handelt es sich vorzugsweise um einen direkt angetriebenen Permanentmagnet erregten Synchrongenerator. Obgleich die Permanentmagneten zur Erhöhung des Bremsmoments des kurzgeschlossenen Generators bei der Kriech-Rotationsbewegung vorzugsweise radial außerhalb der Statorspulen sitzen, ist es ebenfalls denkbar, diese gegenüber den Statorspulen radial innenliegend anzuordnen.

Der Generator besitzt in vorteilhafter Weise eine Vielzahl von Statorspulen, deren Wicklungen in diesem Falle bevorzugt allesamt gemeinsam über den Kurzschlussschalter elektrisch leitend miteinander verbunden werden, um die Kriech-Rotationsbewegung des Rotors zu ermöglichen. Bei dieser Ausführungsform der Erfindung ist der Kurzschlusschalter beispielsweise als Stufenschalter ausgebildet und umfasst mehrere den Statorwicklungen zugeordnete Einzelschalter, die separat betätigbar sind. Über diese lassen sich die Statorwicklungen zur Erzeugung unterschiedlich starker Bremsmomente jeweils einzeln kurzschließen, wobei im Falle eines Mehrstufenschalters z.B. in der 1. Stufe eine Statorwicklung, in der zweiten Stufe zwei Statorwicklungen und in der dritten Stufe alle drei Statorwicklungen gemeinsam kurzgeschlossen werden.

Die Erfindung wird nachfolgend am Beispiel einer erfindungsgemäßen Windturbine zur Durchführung des zuvor beschriebenen erfindungsgemäßen Verfahrens anhand von Zeichnungen beschrieben.

In den Zeichnungen zeigen:
- Fig. 1: eine schematische Darstellung einer erfindungsgemäßen Windturbine und
- Fig. 2: ein elektrisches Ersatzschaltbild, welches den kurzgeschlossenen Generator während der Kriech-Rotationsbewegung wiedergibt.

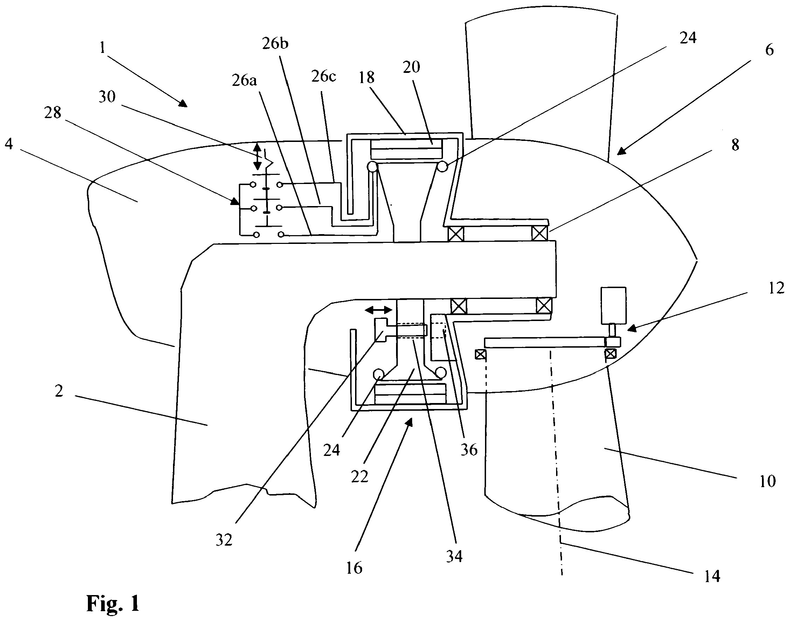

Wie in Fig. 1 gezeigt ist, umfasst eine erfindungsgemäße Windturbine 1 einen lediglich ausschnittsweise dargestellten Turm 2 mit einer um die Turmlängsachse verschwenkbaren Gondel 4, an der ein Rotor 6 über schematisch angedeutete Lager 8 drehbar aufgenommen ist. Der Rotor 6 umfasst zwei, drei oder mehr Rotorblätter 10, von denen zumindest ein Rotorblatt 10, vorzugsweise jedoch alle Rotorblätter über eine schematisch angedeutete Verstelleinrichtung 12 um ihre Rotorblattachse 14 verdrehbar sind, um diese aus der dargestellten Betriebsstellung in eine als Fahnenstellung bezeichnete Position zu verdrehen, in der der Winkel zwischen einer gedachten zentralen Mittelebene des Rotorblatts 10 und der Drehebene, die durch den rotierenden Rotor 6 aufgespannt wird, 90° beträgt.

Wie der Darstellung der Figur 1 weiterhin entnommen werden kann, ist der Rotor 6 antriebsmäßig mit einem Generator 16 gekoppelt, der bei der dargestellten Ausführungsform der erfindungsgemäßen Windturbine 1 als ein direkt angetriebener Außenläufer-Synchron-Generator ausgestaltet ist, dessen radial außen liegender Generator-Rotor 18 auf seiner Innenseite umlaufend mit Permanentmagneten 20 besetzt ist, welche sich mit ihrer Innenseite in dichtem Abstand um den gestellfest an der Gondel 4, bzw. am Turm 2 aufgenommenen Stator 22 herum erstrecken. Den Permanentmagneten gegenüberliegend sind am Stator 22 des Generators 16 eine Vielzahl von Statorwicklungen 24 angeordnet, die in der Weise miteinander verschaltet sind, dass in den Statorwicklungen 24 bei einer Rotation des Rotor 6 eine Wechselspannung induziert wird, die an den drei schematisch angedeuteten Phasen 26a, 26b und 26c der Statorwicklungen 24 abgenommen und in bekannter Weise über einen nicht gezeigten Wechselrichter oder dergleichen in ein Stromnetz eingespeist wird.

Wie in der Darstellung der Fig. 1 weiterhin gezeigt ist, ist bevorzugt innerhalb der Gondel 4 ein Kurzschlussschalter 28 angeordnet, welcher von einer Bedienperson, die sich in der Gondel 4 befindet, vorzugsweise von Hand entsprechend dem Doppelpfeil 30 betätigt werden kann, um die drei Phasen 26a, 26b und 26c elektrisch gegeneinander kurz zu schließen oder die kurz geschlossene Leitungsverbindung zu trennen.

Hierdurch ist es in Verbindung mit einem Verstellen der Rotorblätter 10 aus der Fahnenstellung in einem Bereich zwischen vorzugsweise etwa 95° und 85° Grad bezogen auf die Drehebene des Rotors 6 möglich, den Rotor 6 in eine Kriech-Rotationsbewegung mit einer solch niedrigen Rotationsgeschwindigkeit zu versetzen, dass ein lediglich schematisch angedeuteter Arretierbolzen 32, der in einer mit dem Stator 22 des Generators 16, bzw. der Gondel 4 verbundenen gestellfesten Führungsbohrung 34 verschiebbar aufgenommen ist, bei drehendem Rotor 6 zur Arretierung desselben in eine rotorseitige Aufnahmeöffnung 36 eingeschoben werden kann, die sich mit dem Rotor 6 mitbewegt.

In Fig. 2 ist das elektrische Ersatzschaltbild des kurzgeschlossenen Generators 16 wiedergegeben, wobei *U*ₚ die Polradspannung (durch Bewegungsinduktion erzeugte Spannung in einer Phase), *L*ₕ die Hauptinduktivität einer Phase, *L_{σ}* die Streuinduktivität einer Phase und *R*ₛ den Phasenwiderstand der Statorwicklung 24 bedeuten.

### Liste der Bezugszeichen

- 1: erfindungsgemäße Windturbine
- 2: Turm
- 4: Gondel
- 6: Rotor
- 8: Lager für Rotor
- 10: Rotorblatt
- 12: Verstelleinrichtung
- 14: Rotorblattachse
- 16: Generator
- 18: Generator-Rotor
- 20: Permanentmagnete
- 22: Stator des Generators
- 24: Statorwicklungen
- 26a,b,c: Phasen
- 28: Kurzschlussschalter
- 30: Doppelpfeil
- 32: Arretierbolzen
- 34: gestellsfeste Führungsbohrung
- 36: rotorseitige Aufnahmeöffnung
- *U*ₚ: Polradspannung
- *L*ₕ: Hauptinduktivität einer Phase,
- *L*_{σ}: Streuinduktivität einer Phase
- *R*ₛ: Phasenwiderstand der Statorwicklung

## Patentansprüche

1. Verfahren zum Arretieren des Rotors (6) einer Windturbine (1), der wenigstens ein Rotorblatt (10) aufweist, das um seine Längsachse durch eine Verstelleinrichtung (12) aus einer Betriebsstellung in eine Fahnenstellung verstellbar ist, in der im Wesentlichen kein Drehmoment auf den Rotor (6) ausgeübt wird, wobei der Rotor (6) einen Generator (16) antreibt und durch Einschieben eines Arretierbolzens (32) in eine rotorseitige Aufnahmeöffnung (36) in einer Arretierposition gegen eine Rotation sperrbar ist,
**dadurch gekennzeichnet, dass**
der Rotor (6) durch Kurzschließen wenigstens einer Statorwicklung (24) des Generators (16) in eine Kriech-Rotationsbewegung mit einer solch niedrigen Rotationsgeschwindigkeit versetzt wird, dass der Arretierbolzen (32) bei rotierendem Rotor (6) in die rotorseitige Aufnahmeöffnung (36) einschiebbar ist.

2. Verfahren nach Anspruch 1,
**gekennzeichne**t, durch die folgenden Verfahrensschritte:
Versetzen der Windturbine (1) in den Trudelbetrieb durch Verstellen des wenigstens einen Rotorblatts (10) aus der Betriebsstellung in die Fahnenstellung,
Überprüfen der Windgeschwindigkeit und/oder Windrichtung,
Nachführen der Gondel (4) der Windturbine (1) derart, dass die Rotorachse im Wesentlichen in Windrichtung weist,
Überprüfen der Rotordrehzahl und Verifizierung des Trudelbetriebs, Kurzschließen von wenigstens einer Statorwicklung (24) zur Einleitung der Kriech-Rotationsbewegung des Rotors (6),
Anfahren der gewünschten Arretierposition durch Verstellen des wenigstens einen Rotorblatts (10), und
Einschieben des Arretierbolzens (32) in die Aufnahmeöffnung (36) nach Erreichen der Arretierposition.

3. Verfahren nach einem der vorhergehenden Ansprüche,
**dadurch gekennzeichnet, dass**
das wenigstens eine Rotorblatt (10) zum Anfahren der Arretierposition aus der Fahnenstellung (90°) in einem Winkelbereich zwischen etwa 95° und 85° Grad bezogen auf die Drehebene des Rotors verstellt wird.

4. Verfahren nach einem der vorhergehenden Ansprüche,
**dadurch gekennzeichnet, dass**
die Rotationsgeschwindigkeit der Kriech-Rotationsbewegung weniger als 1 Grad/s, vorzugsweise zwischen 0,00 und 0,15 Grad/s beträgt.

5. Verfahren nach einem der Ansprüche 2 bis 4,
**dadurch gekennzeichnet, dass**
das Verstellen des Rotorblatts (10) in Abhängigkeit von der momentan herrschenden Windgeschwindigkeit und/oder Windrichtung manuell erfolgt.

6. Verfahren nach einem der Ansprüche 2 bis 5,
**dadurch gekennzeichnet, dass**
die Windnachführung der Gondel (4) in Abhängigkeit von der momentan herrschenden Windgeschwindigkeit und/oder Windrichtung manuell erfolgt.

7. Verfahren nach einem der Ansprüche 2 bis 4,
**dadurch gekennzeichnet, dass**
das Überprüfen der Windgeschwindigkeit und/oder Windrichtung, das Nachführen der Gondel (4), das Überprüfen der Rotordrehzahl und Verifizieren des Trudelbetriebs, das Kurzschließen wenigstens einer Statorwicklung (24), das Anfahren der gewünschten Arretierposition und/oder das Einschieben des Arretierbolzens (32) in die Aufnahmeöffnung beim Erreichen der Arretierposition automatisiert erfolgt.

8. Windturbine (1) zur Durchführung des Verfahrens nach einem der vorhergehenden Ansprüche, umfassend einen Rotor (6), der einen Generator (16) antreibt und wenigstens ein Rotorblatt (10) aufweist, das durch eine Verstelleinrichtung (12) aus einer Betriebsstellung in eine Fahnenstellung verstellbar ist, wobei der Rotor (6) durch Einschieben eines Arretierbolzens (32) in eine rotorseitige Aufnahmeöffnung (36) in einer Arretierposition gegen eine Rotation sperrbar ist,
**dadurch gekennzeichnet, dass**
ein Kurzschlussschalter (28) vorgesehen ist, durch den der Rotor (6) durch Kurzschließen wenigstens einer Statorwicklung (24) des Generators (16) in eine Kriech-Rotationsbewegung mit einer solch niedrigen Rotationsgeschwindigkeit versetzbar ist, dass der Arretierbolzen (32) bei rotierendem Rotor (6) in die rotorseitige Aufnahmeöffnung (36) einschiebbar ist.

9. Vorrichtung nach Anspruch 8,
**dadurch gekennzeichnet, dass**
der Generator (16) insbesondere ein direkt angetriebener Permanentmagnet erregter Synchrongenerator, ist.

10. Vorrichtung nach Anspruch 8,
**dadurch gekennzeichnet, dass**
der Generator bevorzugt ein direkt angetriebener elektrisch erregter Synchrongenerator ist, und dass die Erregerwicklung zur Erzeugung der Rotations-Kriechbewegung mit einer Batterie verbindbar sind.

11. Vorrichtung nach einem der Ansprüche 8 bis 10,
**dadurch gekennzeichnet, dass**
der Generator (16) eine Vielzahl von Statorwicklungen (24) aufweist, und dass der Kurzschlusschalter (28) mehrere, den Statorwicklungen zugeordnete Einzelschalter umfasst, die separat betätigbar sind und über die sich die Statorwicklungen (24) zur Erzeugung unterschiedlich starker Bremsmomente einzeln oder in Gruppen kurzschließen lassen.

## Claims

1. Method for stopping the rotor (6) of a wind turbine (1), having at least one rotor blade (10) which is adjustable about its longitudinal axis by an adjusting device (12) from an operational position to a feathering position in which there is essentially no rotational torque being applied to the rotor (6) wherein the rotor (6) drives a generator (16) and can be locked by inserting a lock pin (32) into a reception hole (36) on the rotor into a locking position to prevent rotation,
**characterised in that**
the rotor (6) is transferred by short-circuiting at least one stator winding (24) of the generator (16) to a creeping rotational movement at a sufficiently low rotational speed that the lock pin (32) can be inserted into the reception hole (36) on the rotor while the rotor (6) is turning.

2. Method according to claim 1
**characterised by** the following method steps:
transferring the wind turbine (1) into idling by adjusting the at least one rotor blade (10) from the operational position to the feathering position,
checking the wind speed and/or wind direction,
adjusting the nacelle (4) of the wind turbine (1) such that the rotor axis points essentially in the wind direction,
checking the rotor speed and verifying the idling,
short-circuiting at least one stator winding (24) to introduce the creeping rotational movement of the rotor (6),
running down to the desired locking position by adjusting at least one rotor blade (10), and
inserting the lock pin (32) into the reception hole (36) after reaching the locking position.

3. Method according to any one of the preceding claims,
**characterised in that**
the at least one rotor blade (10) is adjusted to run down to the locking position from the feathering position (90°) at an angular range between about 95° and 85° in relation to the rotational plane of the rotor.

4. Method according to any one of the preceding claims,
**characterised in that**
the rotational speed of the creeping rotational movement is less than 1°/sec, preferably between 0.00° and 0.15°/sec.

5. Method according to any one of claims 2 to 4,
**characterised in that**
the adjustment of the rotor blade (10) is carried out manually as a function of the instantaneously prevailing wind speed and/or wind direction.

6. Method according to any one of claims 2 to 5,
**characterised in that**
the wind adjustment of the nacelle (4) is carried out manually as a function of the instantaneously prevailing wind speed and/or wind direction.

7. Method according to any one of claims 2 to 4,
**characterised in that**
checking the wind speed and/or wind direction, the adjustment of the nacelle (4), the checking of the rotor speed and verifying the idling, the short-circuiting of at least one stator winding (24), the running down to the desired locking position and/or the inserting of the lock pin (32) into the reception hole after reaching the locking position, take place automatically.

8. Wind turbine (1) for performing the method according to any one of the preceding claims, comprising a rotor (6), which drives a generator (16) and has at least one rotor blade (10), which can be adjusted by an adjusting device (12) from an operational position to a feathering position, wherein the rotor (6) can be locked by inserting a lock pin (32) into a reception hole (36) on the rotor into a locking position to prevent rotation,
**characterised in that**
a short-circuit switch (28) is provided by means of which the rotor (6) can be transferred by short-circuiting at least one stator winding (24) of the generator (16) to a creeping rotational movement at a sufficiently low rotational speed that the lock pin (32) can be inserted into the reception hole (36) on the rotor while the rotor (6) is turning.

9. Device according to claim 8,
**characterised in that**
the generator (16) is, in particular, a synchronous generator excited by a directly driven permanent magnet.

10. Device according to claim 8,
**characterised in that**
the generator is preferably a directly driven, electrically excited synchronous generator and that the excitation winding to produce the rotational creeping movement can be connected to a battery.

11. Device according to any one of claims 8 to 10,
**characterised in that**
the generator (16) has a multiplicity of stator windings (24) and that the short-circuit switch (28) comprises several individual switches associated with the stator windings, wherein said individual switches can be actuated separately and by means of which the stator windings (24) can be short-circuited to produce braking torques of different strengths either individually or in groups.

## Revendications

1. Procédé d'arrêt du rotor (6) d'une éolienne (1), qui présente au moins une pale de rotor (10) pouvant être réglée autour de son axe longitudinal grâce à un appareil de réglage (12) à partir d'une position de fonctionnement jusqu'à une position de mise en drapeau, au sein de laquelle essentiellement aucun moment de rotation n'est exercé sur le rotor (6), dans lequel le rotor (6) entraîne un alternateur (16) et peut être verrouillé dans une position d'arrêt à l'encontre d'une rotation par insertion d'une goupille de blocage (32) dans une ouverture de réception côté rotor (36),
**caractérisé en ce que**
le rotor (6) est placé dans un mouvement de rotation à vitesse lente par court-circuitage d'au moins un enroulement statorique (24) de l'alternateur (16) avec une vitesse de rotation suffisamment basse pour que la goupille de blocage (32) puisse être insérée dans l'ouverture de réception côté rotor (36) lorsque le rotor (6) est en cours de rotation.

2. Procédé selon la revendication 1,
**caractérisé par** les étapes ci-dessous consistant à :
placer l'éolienne (1) dans un mode de fonctionnement au ralenti par calage de la au moins une pale de rotor (10) à partir de la position de fonctionnement jusque dans la position de mise en drapeau,
contrôler la vitesse du vent et/ou la direction du vent,
repositionner la nacelle (4) de l'éolienne (1) de sorte que l'axe de rotor pointe essentiellement dans la direction du vent,
contrôler le régime du rotor et vérifier le mode de fonctionnement au ralenti,
court-circuiter au moins un enroulement statorique (24) en vue de l'initialisation du mouvement de rotation à vitesse lente (6),
adopter la position d'arrêt souhaitée par calage de la au moins une pale de rotor (10), et
insérer la goupille de blocage (32) dans l'ouverture de réception (36) après atteinte de la position d'arrêt.

3. Procédé selon l'une quelconque des revendications précédentes,
**caractérisé en ce que**
la au moins une pale de rotor (10) destinée à l'adoption de la position d'arrêt est calée à partir de la position de mise en drapeau (90°) jusqu' à un secteur angulaire compris entre environ 95° et 85° par rapport au plan de rotation du rotor.

4. Procédé selon l'une quelconque des revendications précédentes,
**caractérisé en ce que**
la vitesse de rotation du mouvement de rotation à vitesse lente est inférieure à 1 degré/s, de manière préférée compris entre 0,00 et 0,15 degré/s.

5. Procédé selon l'une quelconque des revendications 2 à 4,
**caractérisé en ce que**
le calage de la pale de rotor (10) se fait manuellement en fonction de la vitesse du vent et/ou de la direction du vent régnant de manière momentanée.

6. Procédé selon l'une quelconque des revendications 2 à 5,
**caractérisé en ce que**
le repositionnement de la nacelle (4) par rapport au vent se fait manuellement en fonction de la vitesse du vent et/ou de la direction du vent régnant actuellement.

7. Procédé selon l'une quelconque des revendications 2 à 4,
**caractérisé en ce que**
le contrôle de la vitesse du vent et/ou de la direction du vent, le repositionnement de la nacelle (4), le contrôle du régime de rotor et la vérification du mode de fonctionnement au ralenti, le court-circuitage d'au moins un enroulement statorique (24), l'adoption de la position d'arrêt souhaitée et/ou l'insertion de la goupille de blocage (32) dans l'ouverture de réception se fait de manière automatisée lors de l'atteinte de la position d'arrêt.

8. Eolienne (1) destinée à la mise en oeuvre du procédé selon l'une quelconque des revendications précédentes, comprenant un rotor (6), qui entraîne un alternateur (16) et présente au moins une pale de rotor (10) qui peut être calée grâce à un dispositif de calage (12) à partir d'une position de fonctionnement jusqu'à une position de mise en drapeau, dans laquelle le rotor (6) peut être verrouillé dans une position d'arrêt à l'encontre d'une rotation grâce à l'insertion d'une goupille de blocage (32) dans une ouverture de réception côté rotor (36),
**caractérisée en ce que**
un commutateur de court-circuit (28) est prévu, grâce auquel le rotor (6) peut être placé dans un mouvement de rotation à vitesse lente par court-circuitage d'au moins un enroulement statorique (24) de l'alternateur (16) avec une vitesse de rotation suffisamment basse pour que la goupille de blocage (32) puisse être insérée dans l'ouverture de réception côté rotor (36) lorsque le rotor est en cours de rotation (6).

9. Dispositif selon la revendication 8,
**caractérisé en ce que**
l'alternateur (16) est en particulier un alternateur synchrone excité par un aimant permanent et entraîné de manière directe.

10. Dispositif selon la revendication 8,
**caractérisé en ce que**
l'alternateur est de manière préférée un alternateur synchrone excité de manière électrique et entraîné de manière directe, et l'enroulement excitateur destiné à produire le mouvement de rotation à vitesse lente peut être relié à une batterie.

11. Dispositif selon l'une quelconque des revendications 8 à 10,
**caractérisé en ce que**
l'alternateur (16) présente une pluralité d'enroulements statoriques (24), et le commutateur de court-circuit (28) comprend plusieurs commutateurs individuels, associés aux enroulements statoriques, qui peuvent être actionnés de manière séparée et par l'intermédiaire desquels les enroulements statoriques (24) destinés à produire des moments de freinage de puissances différentes peuvent être court-circuités de manière individuelle ou groupée.
